# EUROPEAN PATENT SPECIFICATION

(11) **EP 1 985 469 B1**
(45) Date of publication and mention of the grant of the patent: **08.08.2012**
(21) Application number: 07708345.9
(22) Date of filing: 13.02.2007
(51) Int. Cl.: B60C 15/00, B60C 15/06

(54) **PNEUMATIC TIRE**
LUFTREIFEN
PNEUMATIQUE

(30) Priority: 13.02.2006 JP 2006035559
(43) Date of publication of application: 29.10.2008
(73) Proprietor: Bridgestone Corporation, Tokyo 104-8340 (JP)
(72) Inventor: NAKAMURA, Shinsuke, c/o Bridgestone Corporation Technical Center, Kodaira-shi, Tokyo 187-8531 (JP)
(74) Representative: Oxley, Robin John George
(86) International application number: PCT/JP2007/052454
(87) International publication number: WO 2007/094281

(56) References cited:
- JP-A- 01 285 410
- JP-A- 04 185 510
- JP-A- 11 227 423

## Description

### TECHNICAL FIELD

The present inventions relate to a pneumatic tire.

### BACKGROUND ART

Heretofore, there is a technique for preventing separation of carcass layer in order to improve durability of bead. For example, a technique in which an angle is provided at turnbacks of a carcass layer is disclosed (see Patent Document 1 or Patent Document 2). Alternatively, a technique in which intermediate portions of turnbacks are made close to a main body of a carcass layer is disclosed (see Patent Document 3).
Patent Document 1: Japanese Patent Application Laid-Open NO. Hei 11-170807
Patent Document 2: Japanese Patent Application Laid-Open NO. 2002-347409
Patent Document 3: Japanese Patent Application Laid-Open NO. Hei 1-111504

JP-4-185510 and US 5,236,031 disclose a pneumatic radial tire of construction vehicle according to the preamble of claim 1.

### DISCLOSURE OF THE INVENTION

By the way, in ultra-heavy load tires (for example, tires for construction vehicles) or the like, there is a case where cords (filaments) at turnbacks of a carcass layer may be cut off due to large bead slumping deformation with tire flexure. It is difficult to cope with such cord-cut by way of the above-mentioned techniques.

Specifically, according to a tire with the technique of Patent Document 1 or Patent Document 2, a longitudinal elastic modulus of the tire reduces. As a result, since on-load bead slumping deformation with tire flexure becomes larger, compression inputs into turnbacks increase. Therefore, cord-cut is subject to occur at the turnbacks.

In addition, according to a tire with the technique of Patent Document 3, rubber shear strain increases between turnbacks and a main body. As a result, rubber may break between the turnbacks and the main body. Simultaneously, since reduction of compression inputs into the turnbacks is insufficient, cord-cut is subject to occur at the turnbacks.

Therefore, it is an object of the present inventions to provide a pneumatic tire that can prevent cord-cut in turnbacks of a carcass layer.

A pneumatic tire according to the present invention includes a main body forming a troidal structure between a pair of bead cores embedded within beads, respectively, and turnbacks folded back along circumferential surfaces of the bead cores, respectively, and meets following conditions.
(a) Aspect ratio equal-to or smaller-than 80 %
(b) Cords composing the turnbacks are arranged with 0 to 10 degree to a radial direction
(c) 2xFH ≤ CE ≤ 6xFH
(d) 3x*a* ≤ *t* ≤ 5x*a* within a range of 2xFH to 4xFH from an inner circumferential flange edge of a rim in a tire radial direction
(e) 0.915 ≤ L2/L1 ≤ 1.000 at a level 3xFH from the inner circumferential flange edge of the rim in the tire radial direction
   CE: a distance in a tire radial direction from an edge of the turnback to a rim-side edge of the bead core
   FH: a flange height of a rim
   an intersecting point A: an intersecting point of a first parallel line PL₁ parallel to a tire rotational axis and a tire outer surface
   an intersecting point B: an intersecting point of a first vertical line VL₁, which passes over the intersecting point A and is vertical to the main body, and the main body
   an intersecting point C: an intersecting point of the first vertical line VL₁ and the turnback
   t: a distance between the intersecting points B and C
   *a*: a diameter of the cord composing the turnback
   an intersecting point D: an intersecting point of a second parallel line PL₂, which passes over a center of the bead core and is parallel to the tire rotational axis, and the main body
   an intersecting point E: an intersecting point of the second parallel line PL₂ and the turnback
   L1: a length along the main body between the intersecting points B and D
   L2: a length along the turnback between the intersecting points C and E

In the pneumatic tire according to the present invention, each of the turnbacks is arranged closer to a neutral plane (the main body) of bending deformation than that in an ordinary pneumatic tire. Therefore, waving of the turnbacks is reduced due to reduction of compression of the turnbacks. As a result, cord-cut (filament-cut) in the turnbacks can be prevented.

In addition, accumulation of an upthrust compression from an inner circumferential side toward an outer circumferential side is reduced due to reduction of compression of the turnbacks and thereby cord-cut (filament-cut) in the turnbacks can be prevented.

Here, it is preferable that 0.23 ≤ Y/Z ≤ 0.76 is met at a level 7xFH from the inner circumferential flange edge of the rim in the tire radial direction.
intersecting point F: an intersecting point of a third parallel line PL₃ parallel to the tire rotational axis and the tire outer surface
an intersecting point G: an intersecting point of a second vertical line VL₂, which passes over the intersecting point F and is vertical to the main body, and the main body
an intersecting point H: an intersecting point of the second vertical line VL₂ and the turnback
Y: a distance between the intersecting points G and H
Z: a maximum width of the bead core in a tread width direction

According to this, cord-cut in the turnbacks of the carcass layer can be prevented significantly by regulating the distance Y between the intersecting points G and H at a position (0.7FH) where bending deformation along a rim flange would be maximum.

Here, it is preferable that α > 0 is met.
α: an angle enclosed by a third vertical line VL₃ ,which passes over the intersecting point E and is vertical to the tire rotational axis, and the turnback

According to this, reduced can be flexure (back plane flexure) due to rubber (back plane rubber) at a contact plane between the bead and the rim flange being pushed toward the outer circumferential side at slumping deformation of the bead (of the tire). As a result, cracks which are subject to be suffered in the back plane rubber can be restrained. In addition, cord-cut in the turnbacks due to increase of a compressive force in the turnbacks can be prevented.

### BRIEF DESCRIPTION OF THE DRAWINGS

**[****Fig. 1]** Fig. 1 is a cross sectional diagram along a tread width direction showing a pneumatic tire according to a present embodiment.
**[****Fig. 2]** Fig. 2 is an enlarged cross sectional diagram showing a bead of the pneumatic tire according to the present embodiment.
**[****Fig. 3]** Fig. 3 is an explanatory diagram (1) showing on-load dead deformation.
**[****Fig. 4]** Fig. 4 is an explanatory diagram (2) showing on-load dead deformation.
**[****Fig. 5]** Fig. 5 is an explanatory diagram (3) showing on-load dead deformation.

### BEST MODE(S) FOR CARRYING OUT THE INVENTION

One embodiment of a pneumatic tire according to the present invention will be explained with reference to diagrams. Note that, in respect to descriptions on the drawings, each equivalent or corresponding configuration is allocated to an equivalent or corresponding numeral. However, the drawings are shown in outline, and thereby each actual proportion of dimension or the like may be different from an actual one. Therefore, each concrete dimension or the like should be determined with considering explanations below. In addition, each relation or proportion of dimension may be different between the drawings.

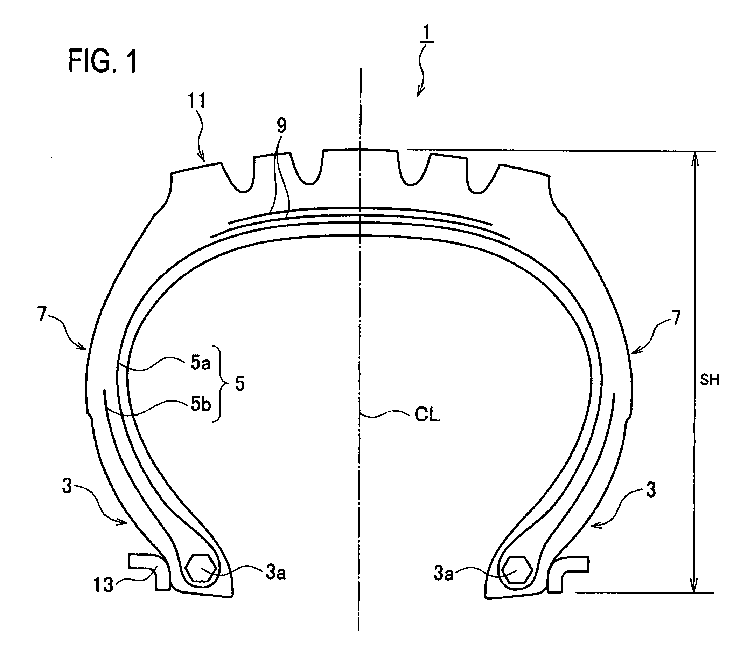

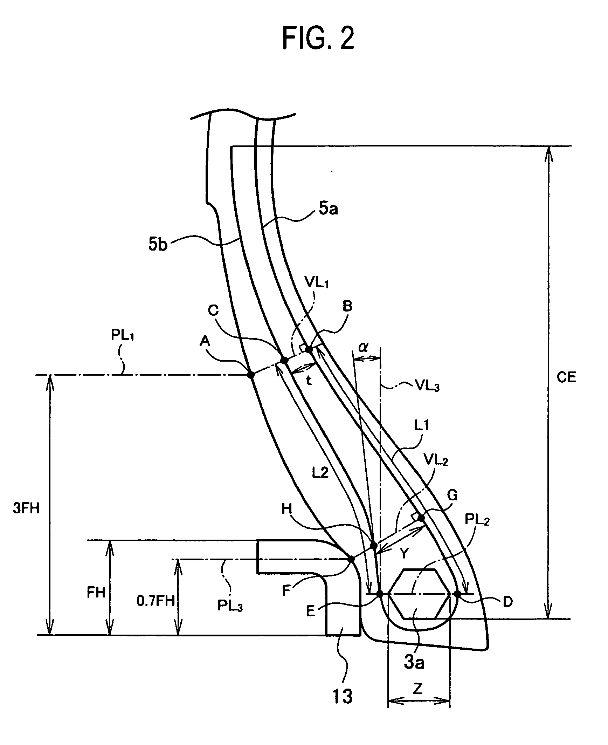

Fig. 1 is a cross sectional diagram along a tread width direction showing a pneumatic tire according to the present embodiment. Fig. 2 is an enlarged cross sectional diagram showing a bead of the pneumatic tire according to the present embodiment. As shown in Fig. 1, the pneumatic tire 1 includes a pair of beads 3, a carcass layer 5, a pair of sidewalls 7, a belt layer 9 and a tread 11. The pneumatic tire 1 has a symmetrical dimension to a tire equatorial line CL.

Note that the pneumatic tire 1 according to the present embodiment is a low-profile radial tire for an ultra-heavy load construction vehicle having an aspect ratio equal-to or smaller-than 80 %. Specifically, the pneumatic tire 1 according to the present embodiment is a radial tire having a rim diameter equal-to or larger-than 57 inches, a load capacity equal-to or larger-than 60 mton (metric ton) and a load factor (k-factor) equal-to or larger-than 1.7.

The carcass layer 5 is composed of a main body 5a and turnbacks 5b. The main body 5a forms a troidal structure between a pair of bead cores 3a that are embedded within the beads 3, respectively. The turnbacks 5b continuously extend from the main body 5a and are folded back from insides toward outsides in the tread width direction along circumferential surfaces of the bead cores 3a, respectively. Cords composing the turnbacks 5b are arranged with 0 to 10 degree to a radial direction.

Here, as shown in Fig. 2, defined as CE is a distance in a tire radial direction from an edge of the turnback 5b to a rim-side edge of the bead core 3a in a cross-sectional plane along the tread width direction. In addition, a flange height of a rim 13 is defined as FH. In this case, 2xFH ≤ CE ≤ 6xFH is met in the pneumatic tire 1 according to the present embodiment.

Note that, if CE is smaller than 2xFH, the turnback 5b may be ripped off from the bead core 3a at a large load input. On the contrary, if CE is larger than 6xFH, the turnback 5b reaches a large deforming range of the main body 5a and thereby flexure at the edge of the turnback 5b may increase.

In addition, in the cross-sectional plane along the tread width direction, defined as a first parallel line PL₁ is a line parallel to a tire rotational axis within a range of 2xFH to 4xFH from an inner circumferential flange edge of the rim 13 in the tire radial direction. Defined as an intersecting point A is an intersecting point of the first parallel line PL₁ and a tire outer surface. Defined as a first vertical line VL₁ is a line passing over the intersecting point A and vertical to the main body 5a. An intersecting point of the first vertical line VL₁ and the main body 5a is defined as an intersecting point B. An intersecting point of the first vertical line VL₁ and the turnback 5b is defined as an intersecting point C. A distance between the intersecting points B and C is defined as *t*. A diameter of the cord composing the turnback 5b is defined as *a*. In this case, 3x*a* ≤ *t* ≤ 5x*a* is met within the above-mentioned range 2xFH to 4xFH in the pneumatic tire 1 according to the present embodiment.

Note that, if *t* is smaller than 3x*a*, flexure between the main body 5a and the turnback 5b may increase and thereby separation may be subject to occur. On the contrary, if *t* is larger than 5x*a*, the turnback 5b reaches a compression input range and thereby cord-cut (filament-cut) may occur in the turnback 5b.

In addition, defined as a second parallel line PL₂ is a line passing over the center of the bead core 3a and parallel to the tire rotational axis. An intersecting point of the second parallel line PL₂ and the main body 5a is defined as an intersecting point D. An intersecting point of the second parallel line PL₂ and the turnback 5b is defined as an intersecting point E. Defined as a first length L1 is a length (width) along the main body 5a between the intersecting points B and D of a level 3xFH from the inner circumferential flange edge of the rim 13 in the tire radial direction. Defined as a second length L2 is a length along the turnback 5b between the intersecting points C and E. In this case, 0.915 ≤ L2/L1 ≤ 1.000 is met in the pneumatic tire 1 according to the present embodiment.

Note that, if L2/L1 is smaller than 0.915, a rubber gauge between the main body 5a and the turnback 5b becomes excessively thin and thereby separation may be subject to occur. On the contrary, if L2/L1 is larger than 1.000, a curve of the turnback 5b becomes enormously steep and thereby cord-cut may be subject to occur in the turnback 5b.

In addition, defined as a third parallel line PL₃ is a line parallel to the tire rotational axis at a level 0.7xFH from the inner circumferential flange edge of the rim 13 in the tire radial direction. An intersecting point of the third parallel line PL₃ and the tire outer surface is defined as an intersecting point F. Defined as a second vertical line VL₂ is a line passing over the intersecting point F and vertical to the main body 5a. An intersecting point of the second vertical line VL₂ and the main body 5a is defined as an intersecting point G. An intersecting point of the second vertical line VL₂ and the turnback 5b is defined as an intersecting point H. A distance between the intersecting points G and H is defined as Y. A maximum width of the bead core 3b along the tread width direction is defined as Z. In this case, 0.23 ≤ Y/Z ≤ 0.76 is met in the pneumatic tire 1 according to the present embodiment.

Note that, if Y/Z is smaller than 0.23, the turnback 5b curves intensively and thereby cord-cut may occur at its intensively curved point. On the contrary, if Y/Z is larger than 0.73, an effect for reducing upthrust compression may not be achieved sufficiently.

In addition, in the cross-sectional plane along the tread width direction, defined as a third vertical line VL₃ is a line passing over the intersecting point E and vertical to the tire rotational axis. Further, an angle enclosed by the third vertical line VL₃ and the turnback 5b is defined as α. In this case, α > 0 is met in the pneumatic tire 1 according to the present embodiment.

Next, Note that, if α is zero, rubber (back plane rubber) at a contact plane between the bead 3 and the flange of the rim 13 is pushed toward an outer circumferential side at slumping deformation of the bead 3 (of the pneumatic tire 1) so as to cause flexure (back plane flexure) and thereby some cracks are subject to be suffered in the back plane rubber. As a result, cord-cut may be subject to occur.

Furthermore, a section height (sectional tire height) is defined as SH. In this case, the pneumatic tire 1 according to the present embodiment is used with being installed on the rim 13 that meets FH/SH ≤ 0.15.

Workings and advantages of the above-explained pneumatic tire 1 according to the first embodiment will be explained with reference to the drawings. First, on-load deformation of a bead 3 in an ordinary pneumatic tire will be explained.

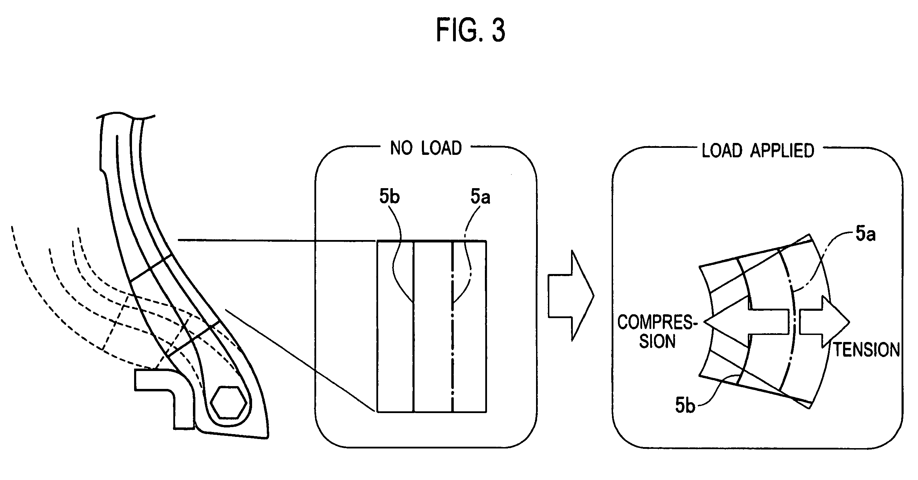

When no load applies, a main body 5a and a turnback 5b do not suffer bending deformation as shown in Fig. 3 (no load). When a load applies, the bead 3 suffers large bending deformation due to slumping. A neutral plane of the bending deformation is the main body 5a. Tension is generated in an inner side in the tread width direction with the main body 5a being neutral and compression is generated in an outer side. The turnback 5b suffers a compressive force as shown in Fig. 3 (load applied).

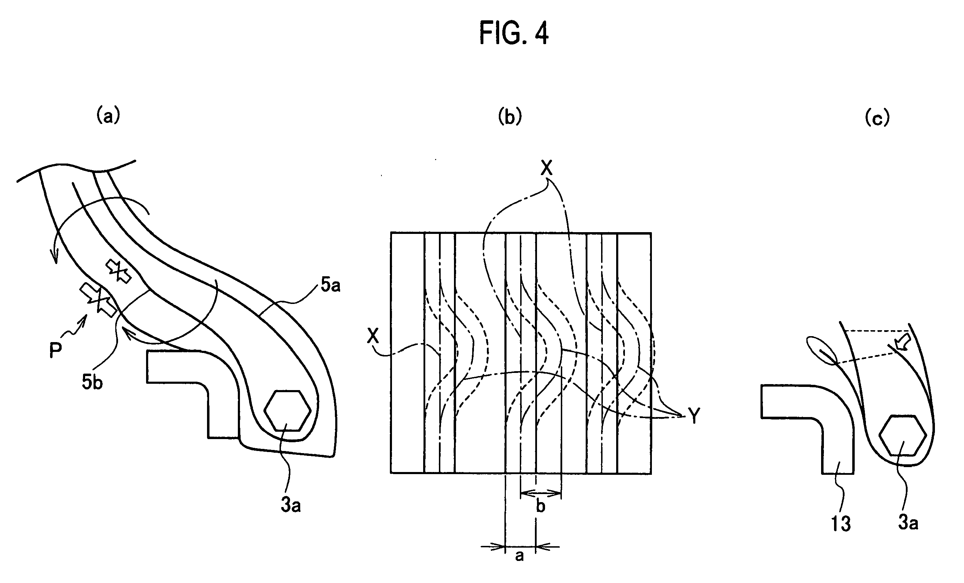

When a compressive force applies, metal cords (carcass cords) can not be compressed and thereby compression is absorbed by waving of the turnback 5b as shown in Fig. 4 (a). As a result, the turnback 5b waves within a sidewall 7 as shown in Fig. 4 (b) [diagram seen from a direction P in Fig 4 (a)]. In this manner, large waving of the turn back 5b causes an intensively compressive force onto filaments composing the cords and thereby the filaments break off.

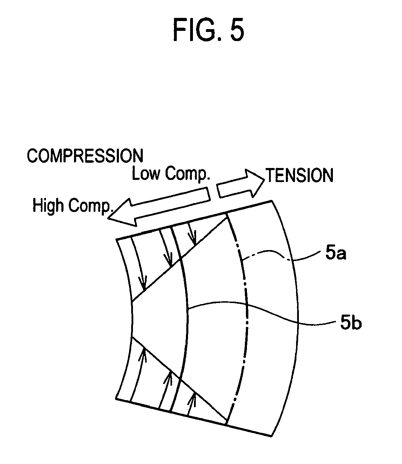

Therefore, in the above-explained pneumatic tire 1 according to the present embodiment, the turnback 5b is arranged closer to the neutral plane (the main body 5a) of the bending deformation than that in the ordinary pneumatic tire as shown in Fig. 5. Therefore, waving of the turnback 5b is reduced due to reduction of the compression of the turnback 5b and thereby cord-cut (filament-cut) in the turnback 5b is prevented.

In addition, a cord central line of the no-load turnback 5b is defined as X in Fig. 4(b). A cord central line of the on-load turnback 5b is defined as Y in Fig. 4 (b). Further, the diameter of the cord composing the turnback 5b is defined as *a* as mentioned above. A curving amount of the cord central line of the turnback 5b is defined as *b*. The "on-load" is a condition where an 80 to 120 % load of a regular load is applied in a direction vertical to the tire rotational axis so as to deform the tire. Note that the "regular load" is a maximum load under an applied size / a ply rating defined in the Year Book 2004 issued by the Tire and Rim Association (TRA) in the United States. A curving index Z is defined as Z₁ = *b*/*a* in Fig. 4(b) and the pneumatic tire 1 according to the present embodiment meets 0 < Z < 0.5.

In addition, in the pneumatic tire 1 according to the present embodiment, since 2xFH ≤ CE ≤ 6xFH is met as explained above, prevented is a burst due to ripping-off of the turnback 5b from the bead core 3a at a large load input. Simultaneously, since the edge of the turnback 5b is in a range where deformation of the main body 5a is small, flexure at the edge of the turnback 5b can be made small.

In addition, in the pneumatic tire 1 according to the present embodiment, since 3x*a* ≤ *t* ≤ 5x*a* is met within the above-mentioned range 2xFH to 4xFH where the compressive deformation of the cords becomes maximum, flexure between the main body 5a and the turnback 5b is made small and thereby separation does not occur. Simultaneously, prevented can be cord-cut due to the turnback 5b reaching the compression input range.

Here, accumulation of upthrust compression into the turnback 5b is another reason of the cord-cut (filament-cut) in the turnback 5b. Specifically, when the pneumatic tire 1 installed on the rim 13 is made flexure, the bead 3 is deformed along the flange of the rim 13 with the main body 5a being as a neutral axis.

At this deformation, a bending-compressed portion of the turnback 5b has high stiffness along a compressive direction. An outer circumferential portion of the turnback 5b outside a specific position suffers compression from an inner circumferential side due to an upthrust. The compression due to an upthrust is accumulated within a portion from the bead core 3a to the specific portion and thereby the cords (filaments) break off at the specific position.

Therefore, in the pneumatic tire 1 according to the present embodiment, 0.915 ≤ L2/L1 ≤ 1.000 is met at the level 3xFH to reduce the upthrust compression and thereby accumulation of compression can be reduced. In addition, since the rubber gauge between the main body 5a and the turnback 5b is not made excessively thin, separation can be restrained. Simultaneously, since the curving index of the turnback 5b is not made large, cord-cut (filament-cut) in the turnback 5b can be prevented.

In addition, in the pneumatic tire 1 according to the present embodiment, 0.23 ≤ Y/Z ≤ 0.76 is met at the level 0.7FH and thereby cord-cut in the turnback 5b can be prevented significantly. In addition, an intensively curving of the turnback 5b is prevented and thereby cord-cut due to intensively curving can be prevented. Simultaneously, an effect for reducing upthrust compression can be achieved sufficiently.

In addition, in the pneumatic tire 1 according to the present embodiment, α>0 is met and thereby reduced can be back plane flexure of the back plane rubber being pushed toward an outer circumferential side at slumping deformation of the bead 3 (of the tire).

In addition, it is preferable that the pneumatic tire 1 according to the present embodiment is used as a low profile radial tire for an ultra-heavy load construction vehicle having an aspect ratio equal-to or smaller-than 80 %, a rim diameter equal-to or larger-than 57 inches, a load capacity equal-to or larger-than 60 mton and a load factor (k-factor) equal-to or larger-than 1.7. In such an ultra-large tire, compressive flexure of the turnback 5b becomes large. Therefore, cord-cut in the turnback 5b can be prevented effectively by adopting the structure explained in the present embodiment.

Furthermore, the pneumatic tire 1 according to the present embodiment can be used with being installed on a rim 13 that meets FH/SH ≤ 0.15. A bending flexure range is made broad due to the install onto a rim with a low flange height FH and thereby a waving range of the on-load turnback 5b can be made narrow.

As explained above, although contents of the present invention have been disclosed through the embodiments of the present invention, it should not be considered that descriptions and the drawings composing a portion of the disclosure limits the present invention.

Specifically, the turnbacks 5b are folded back from insides toward outsides in the tread width direction along the circumferential surfaces of the bead cores 3a, respectively, in the above-explained embodiment. However, they are not limited to this configuration and the turnbacks 5b can be folded back from outsides toward insides in the tread width direction along the circumferential surfaces of the bead cores 3a, respectively.

Based on the disclosure, various alternative embodiments, modes of the invention and operable technologies may be obvious to the person having ordinary skill in the art. Therefore, a technical scope of the present invention is defined only by a subject matter sought to be patented in claims appropriately derived from the above explanation.

Next, a test was conducted with pneumatic tires of samples 1 to 3 and a comparative sample 1 shown below. Note that the present invention does not suffer any limitations by these samples.

Each of the pneumatic tires of the samples 1 to 3 and the comparative sample 1 had a size 59/80R63 and a rim size 44 inches x 5 inches. Each tire structure of the pneumatic tires of the samples 1 to 3 and the comparative sample 1 is shown in a Table 1. Note that the curving index Z₁ was measured with each deformed tire in which rubber between the main body and the turnbacks of the carcass layer has been removed.

**[Table 1]**

| | Sample 1 | Sample 2 | Sample 3 | Comparative Sample |
|---|---|---|---|---|
| CE | 4×FH - 5×FH | 4×FH - 5×FH | 4×FH - 5×FH | 4×FH - 5×FH |
| FH/SH | 0.11 | 0.11 | 0.11 | 0.11 |
| t | 5×*a* | 5×*a* | 4×*a* | *6*×*a* |
| L2/L1 | 0.931 | 0.919 | 0.918 | 0.917 |
| Y | 0.755 | 0.783 | 0.775 | 0.798 |
| Z₁ | 0.100 | 0.150 | 0.200 | 1.000 |
| Y/Z₁ | 7.55 | 5.22 | 3.88 | *0.80* |

### <Evaluation of Tire Life on Drum>

Each tire was rotated under a condition with an air pressure 600 kPa, 150 to 170 % load and a drum rotational speed 8 km/h and a running distance was measured until running could not be continued due to break-off of the bead (break-off of the cords in the carcass layer). The running distance until becoming capable of running of the comparative sample 1 is defined as 100 and relative values of the running distances of the samples 1 to 3 are shown. The larger each of the values is, the better its durability is. Results are shown in Table 2.

**[Table 2]**

| | Sample 1 | Sample 2 | Sample 3 | Comparative Sample |
|---|---|---|---|---|
| Tire Life on Drum | 200 | 160 | 120 | 100 |

It turns out that the pneumatic tires of the samples 1 to 3 are superior to that of the comparative sample 1 in durability of the bead. In other words, compared with the pneumatic tire of the comparative sample 1, cord-cut in the turnbacks of the carcass layer can be prevented in the pneumatic tires of the samples 1 to 3 compared.

### INDUSTRIAL APPLICABILITY

According to the pneumatic tire of the present invention, cord-cut in turnbacks of a carcass layer can be prevented effectively.

## Claims

1. A pneumatic tire (1) comprising a carcass layer (5) including a main body (5a) forming a troidal structure between a pair of bead cores (3a) embedded within beads (3), respectively, and turnbacks (5b) folded back along circumferential surfaces of the bead cores, respectively, **characterized in that**
(a) an aspect ratio is equal-to or smaller-than 80 %,
(b) cords composing the turnbacks are arranged with 0 to 10 degree to a radial direction,
(c) 2xFH ≤ CE ≤ 6xFH is met;
CE: a distance in a tire radial direction from an edge of the turnback to a rim-side edge of the bead core
FH: a flange height of a, rim (13),
(d) 3x*a* ≤ *t* ≤ 5x*a* is met within a range of 2xFH to 4xFH from an inner circumferential flange edge of the rim in the tire radial direction;
an intersecting point A: an intersecting point of a first parallel line PL₁ parallel to a tire rotational axis and a tire outer surface
an intersecting point B: an intersecting point of a first vertical line VL₁, which passes over the intersecting point A and is vertical to the main body, and the main body
an intersecting point C: an intersecting point of the first vertical line VL₁ and the turnback
*t*: a distance between the intersecting points B and C
*a*: a diameter of the cord composing the turnback, and
(e) 0.915 ≤ L2/L1 ≤ 1.000 is met at a level 3xFH from the inner circumferential flange edge of the rim in the tire radial direction;
an intersecting point D: an intersecting point of a second parallel line PL₂, which passes over a center of the bead core and is parallel to the tire rotational axis, and the main body
an intersecting point E: an intersecting point of the second parallel line PL₂ and the turnback
L1: a length along the main body between the intersecting points B and D
L2: a length along the turnback between the intersecting points C and E.

2. The pneumatic tire according to claim 1, wherein
0.23 ≤ Y/Z ≤ 0.76 is met at a level 7xFH from the inner circumferential flange edge of the rim in the tire radial direction;
an intersecting point F: an intersecting point of a third parallel line PL₃ parallel to the tire rotational axis and the tire outer surface
an intersecting point G: an intersecting point of a second vertical line VL₂, which passes over the intersecting point F and is vertical to the main body, and the main body
an intersecting point H: an intersecting point of the second vertical line VL₂ and the turnback
Y: a distance between the intersecting points G and H
Z: a maximum width of the bead core in a tread width direction.

3. The pneumatic tire according to claim 1 or 2, wherein α > 0 is met;
α: an angle enclosed by a third vertical line VL₃ ,which passes over the intersecting point E and is vertical to the tire rotational axis, and the turnback.

## Patentansprüche

1. Luftreifen (1), der eine Karkassenlage (5) aufweist, die umfasst: einen Hauptkörper (5a), der eine ringförmige Struktur zwischen einem Paar Wulstkernen (3a) bildet, eingebettet jeweils innerhalb der Wülste (3); und Umschlagabschnitte (5b), die jeweils längs der Umfangsflächen der Wulstkeme zurückgefaltet sind, **dadurch gekennzeichnet, dass**:
(a) ein Aspektverhältnis gleich oder kleiner als 80 % ist;
(b) die Korde, die die Umschlagabschnitte zusammensetzen, mit 0 bis 10 Grad zu einer radialen Richtung angeordnet sind;
(c) 2 x FH ≤ CE ≤ 6 x FH erfüllt wird,
worin sind:
CE ein Abstand in einer radialen Richtung des Reifens von einem Rand des Umschlagabschnittes zu einem Felgenseitenrand des Wulstkernes,
FH eine Flanschhöhe einer Felge (13);
(d) 3 x a ≤ t ≤ 5 xa innerhalb eines Bereiches von 2 x FH bis 4 x FH von einem inneren peripheren Flanschrand der Felge in der radialen Richtung des Reifens erfüllt wird,
worin sind:
ein Schnittpunkt A: ein Schnittpunkt einer ersten parallelen Linie PL₁ parallel zu einer Reifenrotationsachse und einer Reifenaußenfläche,
ein Schnittpunkt B: ein Schnittpunkt der ersten vertikalen Linie VL₁, die über den Schnittpunkt A gelangt und vertikal zum Hauptkörper ist, und des Hauptkörpers,
ein Schnittpunkt C: ein Schnittpunkt der ersten vertikalen Linie VL₁ und des Umschlagabschnittes,
t: ein Abstand zwischen den Schnittpunkten B und C,
a: ein Durchmesser des Kordes, aus dem der Umschlagabschnitt besteht; und
(e) 0,915 ≤ L2/L1 ≤ 1,000 auf einem Niveau 3 x FH vom inneren peripheren Flanschrand der Felge in der radialen Richtung des Reifens erfüllt wird,
worin sind:
ein Schnittpunkt D: ein Schnittpunkt einer zweiten parallelen Linie PL₂, der über eine Mitte des Wulstkernes gelangt und parallel zur Reifenrotationsachse ist, und des Hauptkörpers,
ein Schnittpunkt E: ein Schnittpunkt der zweiten parallelen Linie PL₂ und des Umschlagabschnittes,
L1: eine Länge längs des Hauptkörpers zwischen den Schnittpunkten B und D,
L2: eine Länge längs des Umschlagabschnittes zwischen den Schnittpunkten C und E.

2. Luftreifen nach Anspruch 1, bei dem
0,23 ≤ Y/Z ≤ 0,76 auf einem Niveau 7 x FH vom inneren peripheren Flanschrand der Felge in der radialen Richtung des Reifens erfüllt wird,
worin sind:
ein Schnittpunkt F: ein Schnittpunkt einer dritten parallelen Linie PL₃ parallel zur Reifenrotationsachse und der Reifenaußenfläche,
ein Schnittpunkt G: ein Schnittpunkt einer zweiten vertikalen Linie VL₂, die über den Schnittpunkt F gelangt und vertikal zum Hauptkörper ist, und des Hauptkörpers,
ein Schnittpunkt H: ein Schnittpunkt der zweiten vertikalen Linie VL₂ und des Umschlagabschnittes,
Y: ein Abstand zwischen den Schnittpunkten G und H,
Z: eine maximale Breite des Wulstkemes in einer Laufflächenbreitenrichtung.

3. Luftreifen nach Anspruch 1 oder 2, bei dem α > 0 erfüllt wird,
worin ist:
α: ein Winkel, der durch eine dritte vertikale Linie VL₃, die über den Schnittpunkt E gelangt und vertikal zur Reifenrotationsachse ist, und den Umschlagabschnitt eingeschlossen wird.

## Revendications

1. Bandage pneumatique (1), comprenant une couche de carcasse (5) englobant un corps principal (5a) formant une structure toroïdale entre une paire de tringles (3a), noyées respectivement dans des talons (3), et des parties retournées (5b) repliées respectivement vers l'arrière le long de surfaces circonférentielles des tringles, **caractérisé en ce que**
a) un rapport d'aspect est égal ou inférieur à 80%
b) des câbles, composant les parties retournées étant agencés à un angle compris entre 0 et 10 degrés par rapport à une direction radiale ;
c) la relation 2xFH ≤ CE ≤ 6xFH est satisfaite ;
CE : une distance dans une direction radiale du bandage pneumatique, d'un bord de la partie retournée vers un bord du côté de la jante de la tringle
FH : une hauteur de rebord d'une jante (13) ;
d) la relation 3xa ≤ t ≤ 5xa est satisfaite dans un intervalle allant de 2xFH à 4xFH, à partir d'un bord du rebord circonférentiel interne de la jante, dans la direction radiale du bandage pneumatique ;
un point d'intersection A : un point d'intersection entre une première ligne parallèle PL₁, parallèle à un axe de rotation du bandage pneumatique, et une surface externe du bandage pneumatique ;
un point d'intersection B : un point d'intersection entre une première ligne verticale VL₁, passant au-dessus du point d'intersection A, et verticale par rapport au corps principal, et le corps principal ;
un point d'intersection C : un point d'intersection entre la première ligne verticale VL₁ et la partie retournée ;
t : une distance entre les points d'intersection B et C ;
a : un diamètre du câblé composant la partie retournée ; et
e) la relation 0,915 ≤ L2/L1 ≤ 1,000 est satisfaite, à un niveau de 3xFH à partir du bord du rebord circonférentiel interne de la jante, dans la direction radiale du bandage pneumatique ;
un point d'intersection D : un point d'intersection entre une deuxième ligne parallèle PL₂, passant au-dessus d'un centre de la tringle et parallèle à l'axe de rotation du bandage pneumatique, et le corps principal ;
un point d'intersection E : un point d'intersection entre la deuxième ligne parallèle PL₂ et la partie retournée ;
L1 : une longueur le long du corps principal entre les points d'intersection B et D ;
L2 : une longueur le long de la partie retournée entre les points d'intersection C et E.

2. Bandage pneumatique selon la revendication 1, dans lequel
la relation 0,23 ≤ Y/Z ≤ 0,76 est satisfaite à un niveau de 7xFH à partir du bord du rebord circonférentiel interne de la jante, dans la direction radiale du bandage pneumatique ;
un point d'intersection F : un point d'intersection entre une troisième ligne parallèle PL₃, parallèle à l'axe de rotation du bandage pneumatique, et la surface externe du bandage pneumatique ;
un point d'intersection G : un point d'intersection entre une deuxième ligne verticale VL₂, passant au-dessus du point d'intersection F et verticale par rapport au corps principal, et le corps principal ;
un point d'intersection H : un point d'intersection entre la deuxième ligne verticale VL₂ et la partie retournée ;
Y : une distance entre les points d'intersection G et H ;
Z : une largeur maximale de la tringle, dans une direction de la largeur de la bande de roulement.

3. Bandage pneumatique selon la revendication 1 ou 2, dans lequel la relation de α > 0 est satisfaite ;
α : un angle renfermé par une troisième ligne verticale VL₃, passant au-dessus du point d'intersection E et verticale par rapport à l'axe de rotation du bandage pneumatique, et la partie retournée.
